# EUROPEAN PATENT APPLICATION

(11) **EP 2 706 696 A2**
(43) Date of publication of application: **12.03.2014**
(21) Application number: 13181811.4
(22) Date of filing: 27.08.2013
(51) Int. Cl.: H04L 1/00

(54) **Data transfer method, information processing apparatus, system and method thereof**

(30) Priority: 31.08.2012 JP 2012191867
(71) Applicant: FUJITSU LIMITED, Kawasaki-shi, Kanagawa 211-8588 (JP)
(72) Inventor: Wada, Hiroyuki, Kanagawa, 211-8588 (JP); Iwatsuki, Ryuji, Kanagawa, 211-8588 (JP); Sato, Kiyoshi, Kanagawa, 211-8588 (JP)
(74) Representative: HOFFMANN EITLE

(57) **Abstract**

An information processing apparatus includes a control information generating unit configured to generate second control information transferred and received on a physical layer of a communication line on the basis of an error on the physical layer of the communication line or an error on a data link layer initialized by use of first control information of the physical layer, and a transmitting unit configured to transmit the second control information generated by the control information generating unit via the physical layer of the communication line when a communication on the data link layer of the communication line is disabled.

## Description

### FIELD

A certain aspect of the embodiments discussed herein is related to an information processing apparatus, a data transfer device used in the information processing apparatus and a method.

### BACKGROUND

The information processing apparatus has hitherto logged a factor of an error if an operation-disabled error occurred, and reported the error to a system monitoring device. Through the process such as this, the information processing apparatus troubleshot the error and a cause, and facilitated replacement of parts and analysis of the cause.

Generally, if such an operation-disabled error occurs, a plurality of secondary errors is induced, and it is difficult to specify a fault portion as the case may be. Therefore, a FATAL packet is distributed to the whole information processing apparatus when the error as a primary cause occurs, thereby restraining the secondary errors from being reported. The method described above has hitherto been adopted.

By the way, over the recent years, in the information processing apparatuses, a high-speed transmission technology using a network such as a serial communication line has dramatically improved a transmission speed between the information processing apparatuses. LSIs (Large Scale Integrations) connected by the network on a board can be exemplified as this type of information processing apparatus. Herein, a problem is that a fault occurs in a communication device connected to the network on the board and that congestion is caused in the network.

[Patent document 1] Japanese Laid-Open Patent Publication No.2005-33628

### SUMMARY

For example, such a case exists that a data link layer capable of transferring the data onto the physical layer is built up in the network. In this type of network, in advance of transmitting and receiving the data, the data link layer is built up, i.e., a network initializing process is executed.

If the data link layer is not yet initialized or if the faults etc occur in circuits configuring the data link layer, however, the information processing apparatus gets disabled from transmitting the data via the data link layer. In this case, such a problem exists that the information processing apparatus cannot transmit the FATAL packet and the secondary error is hard to be restrained. Moreover, in addition to the faults in the circuits configuring the data link layer, a similar problem arises also when the circuits configuring the physical layer get into failures. For instance, if the fault occurs in the circuit other than the circuits related to the transmission and the reception in the circuits of the physical layer, it does not mean that the transmission and the reception via the physical layer cannot be done. If the error exists in a part of the circuits of the physical layer, however, there exists a case where the FATAL packet cannot be transmitted via the data link layer.

Accordingly, it is an object in one aspect of the embodiments to enable transmission of fault information via a network even if a data link layer capable of transferring data onto a physical layer of the network is not configured, if disabled from normally transmitting and receiving the data via a data link layer, or if a fault exists in a part of the physical layer.

According to an aspect of the embodiments, an information processing apparatus includes a control information generating unit configured to generate second control information transferred and received on a physical layer of a communication line on the basis of an error on the physical layer of the communication line or an error on a data link layer initialized by use of first control information of the physical layer, and a transmitting unit configured to transmit the second control information generated by the control information generating unit via the physical layer of the communication line when communications on the data link layer of the communication line are disabled.

### BRIEF DESCRIPTION OF DRAWINGS

FIG.1 is a diagram illustrating an information system according to an example 1;
FIG.2 is a diagram depicting a configuration of a communication circuit;
FIG.3 is a diagram illustrating a structure of a training sequence ordered set;
FIG.4 is a diagram illustrating a structure of a FATAL ordered set;
FIG.5 is a diagram illustrating a configuration of a FATAL ordered set detection circuit;
FIG.6 is a diagram illustrating a timing chart when detecting the FATAL ordered set;
FIG.7 is a diagram illustrating a configuration of a FATAL ordered set generating circuit;
FIG.8 is a diagram illustrating a timing chart when generating the FATAL ordered set;
FIG.9 is a diagram illustrating an error processing circuit;
FIG.10 is a diagram illustrating a configuration of the information processing apparatus according to an example 2;
FIG.11 is a diagram illustrating the error processing circuit according to the example 2;
FIG.12 is a diagram illustrating the FATAL ordered set detection circuit according to an example 3; and
FIG.13 is a diagram illustrating the FATAL ordered set generating circuit according to the example 3.

### DESCRIPTION OF EMBODIMENTS

An information system 10 according to one embodiment will hereinafter be described with reference to the drawings. A configuration of the following embodiment is an exemplification, and the present apparatus is not limited to the configuration of the embodiment.

### Example 1

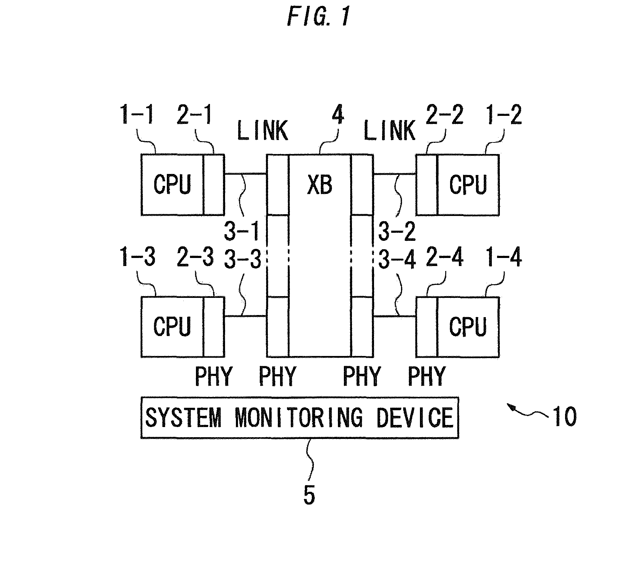

FIG. 1 illustrates the information system 10 according to a first working example (Example 1). The information system 10 includes CPUs 1-1 through 1-4, communication circuits 2-1 through 2-4 connected respectively to the CPUs 1-1 through 1-4, an XB (crossbar) 4 and a system monitoring device 5. Further, the communication circuits 2-1 through 2-4 are connected to the XB 4 via links 3-1 through 3-4. Note that the communication circuits connected to the communication circuits 2-1 through 2-4 are provided also on the side of the XB 4 to the links 3-1 through 3-4.

The CPUs 1-1 through 1-4, the communication circuits 2-1 through 2-4 and the links 3-1 through 3-4 will, in the case of their being generically termed, hereinafter be referred to simply as the CPU 1, the communication circuit 2 and the link 3, respectively. Moreover, FIG. 1 illustrates the 4-tuple CPUs 1 and the 4-tuple communication circuits 2, however, the information system 10 does not limit the numbers of the CPUs 1, the communication circuits 2 and the links 3 to the 4-tuple. Furthermore, in FIG. 1, the XB 4 is provided between the communication circuits 2, however, it is not necessary to provide the XB 4 there. The CPU 1 and the communication circuit 2 are one example of an information processing apparatus. The link 3 is one example of a communication line. The communication circuit 2 is one example of a data transfer device.

With the configuration in FIG. 1, each CPU 1 executes a variety of functions independently or in linkage with other CPUs 1. The system monitoring device 5 starts up and monitors each CPU 1, and manages the information system 10. For example, the system monitoring device 5 collects errors occurring in the CPU 1, the communication circuit 2, the XB 4, etc and executes a recovery process. For instance, the system monitoring device 5, if an individually unrecoverable error occurs in the respective units of the information system 10, i.e., in the CPU 1, the communication circuit 2, the XB 4, etc, restarts the error occurrence portion in order to reset this portion.

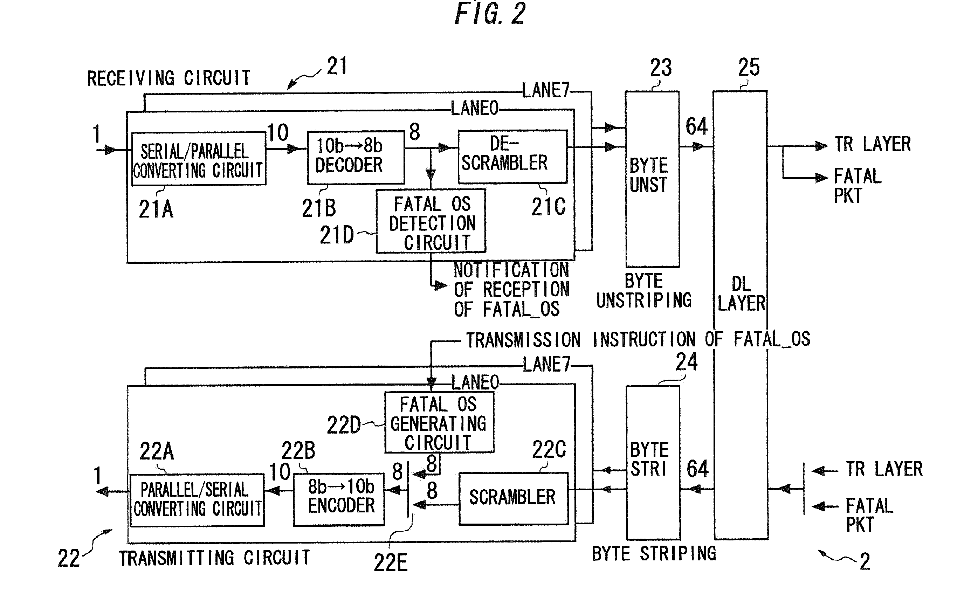

FIG. 2 depicts a configuration of the communication circuit 2. The communication circuit 2 includes a receiving circuit 21, a transmitting circuit 22, a byte unstriping circuit 23 a byte striping circuit 24 and a DL (data link) layer circuit 25. The receiving circuit 21 and the transmitting circuit 22 are provided per lane of a serial transmission link. In FIG. 2, the serial transmission link is provided with 8 lanes, i.e., Lane 0 - Lane 7. It does not, however, mean that the number of the lanes is limited to "8". It also does not mean that the receiving circuit 21 and the transmitting circuit 22 are limited to the serial transmission link.

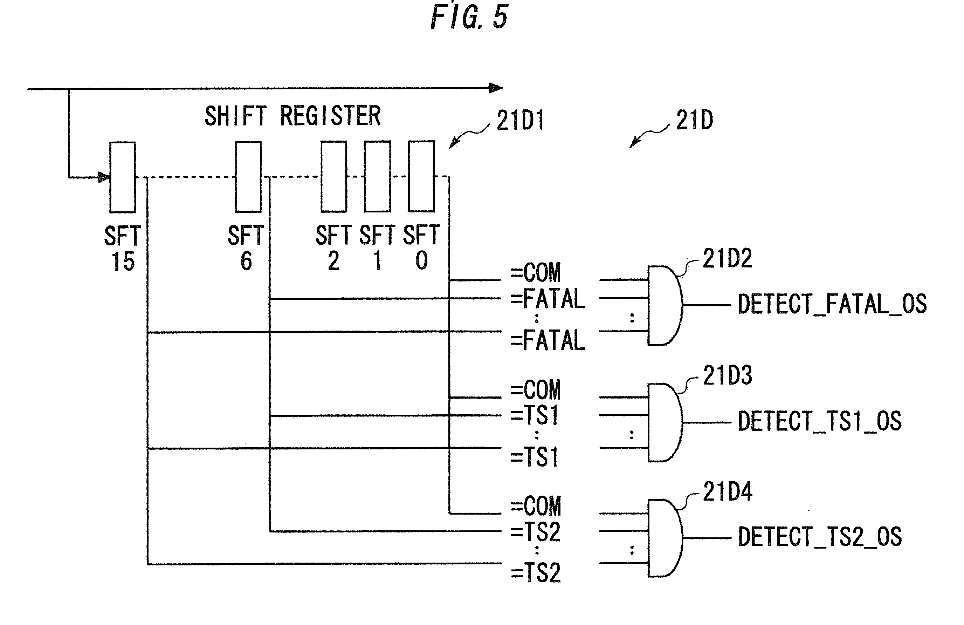

The receiving circuit 21 includes a serial/parallel converting circuit 21A, a 10b/8b decoder 21B, a descrambler 21C, a FATAL ordered set detection circuit 21D. The serial/parallel converting circuit 21A converts serial signals received from the transmission link into parallel signals per 10 bits. The 10b/8b decoder 21B converts the 10-bits data into 8-bits/byte data. With 10-bits/8-bits decoding, the communication circuit 2 can perform the control to keep a DC balance of the transmission link by making, e.g. , the number of "0" and the number of "1" in the signals transmitted via the transmission link approximate to the same number. The descrambler 21C descrambles the signals scrambled by a scrambler 22C on the transmission side. With a scrambling process and a descrambling process, the communication circuit 2 pseudo-randomizes the data to be transmitted and received. The pseudo-randomization of the data restrains similar data from being transmitted repeatedly, thereby restraining noises of a specified frequency from being caused. An in-depth description of the FATAL ordered set detection circuit 21D will be made in FIG. 5. The FATAL ordered set detection circuit 21D is one example of a detection unit.

The byte unstriping circuit 23 packetizes bytes split on a lane-by-lane basis. The DL layer circuit 25 executes a process on the data link layer such as checking a packet sequence number and CRC (Cyclic Redundancy Check) of the data link layer both of which are allocated on the transmission side and handing over a TR (transport) layer packet from which to remove these elements to an unillustrated TR layer circuit. Note that the packet handed over to the TR layer circuit from the DL layer circuit 25 includes, in addition to a TR layer packet containing the data to be transmitted, a FATAL packet for notifying of occurrence of the unrecoverable error.

Further, conversely the DL layer circuit 25 receives the TR layer packet, the FATAL packet, etc from the TR layer and hands these packets in a way that attaches the packet sequence numbers and CRCs thereto, to the byte striping circuit 24. The byte striping circuit 24 splits the packets handed over from the DL layer circuit 25 into the lanes on the byte-by-byte basis and hands the split packets to the transmitting circuit 22.

The transmitting circuit 22 includes a parallel/serial converting circuit 22A, a 8b/10b encoder 22B, the scrambler 22C, a FATAL ordered set generating circuit 22D and a selector 22E. The transmitting circuit 22 is one example of a transmitting unit. The scrambler 22C pseudo-randomizes the data to be transmitted.

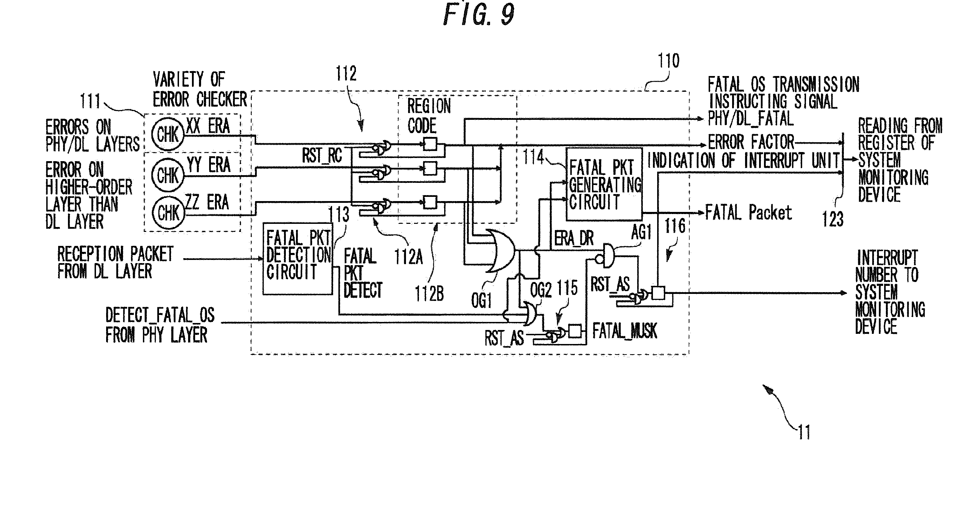

The selector 22E selects any one of an output of the FATAL ordered set generating circuit 22D and an output of the scrambler 22C in accordance with a FATAL_OS (Ordered Set) transmission instructing signal given from an error processing circuit 11 (see FIG. 9). Accordingly, when the FATAL_OS transmission instructing signal is asserted, in place of the output of the scrambler 22C, the FATAL ordered set given from the FATAL ordered set generating circuit 22D is inputted to the 8b/10b encoder 22B. The selector 22E is one example of a selection unit.

Note that the FATAL ordered set given from the FATAL ordered set generating circuit 22D is inputted to the 8b/10b encoder 22B in FIG. 2. Moreover, the output of the 10b/8b decoder 21B is inputted to the FATAL ordered set detection circuit 21D. It does not, however, means that the configuration of the communication circuit 2 is limited to the configuration in FIG. 2. For example, such a configuration may also be taken that the FATAL ordered set given from the FATAL ordered set generating circuit 22D is inputted to the parallel/serial converting circuit 22A. In this case, the output of the serial/parallel converting circuit 21A may be inputted to the FATAL ordered set detection circuit 21D. Namely, FATAL ordered set generating circuit 22D may generate the 10-bits FATAL ordered set. Further, the FATAL ordered set detection circuit 21D may also detect the 10-bits FATAL ordered set.

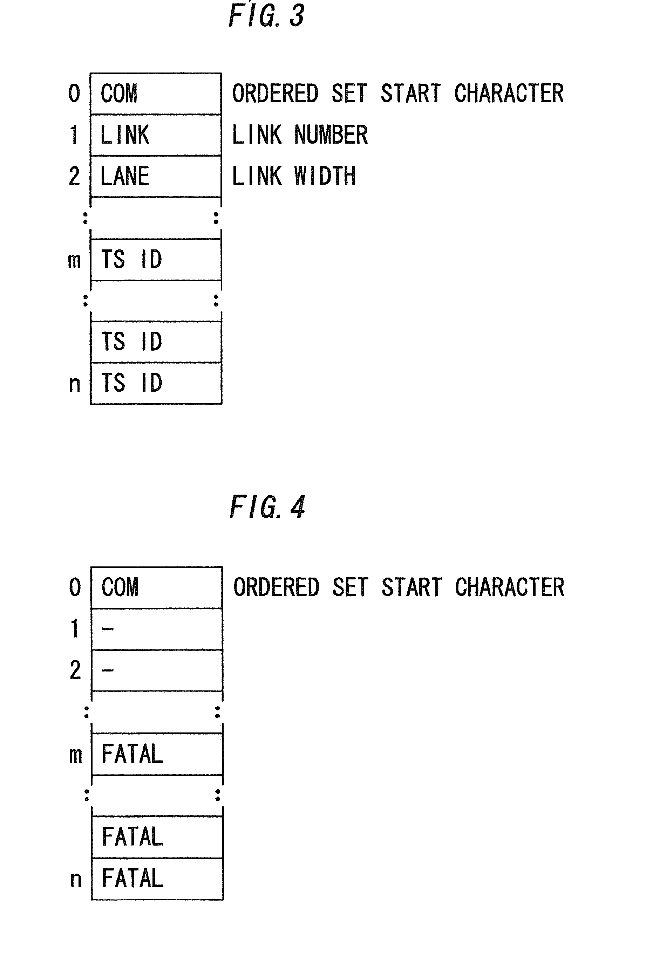

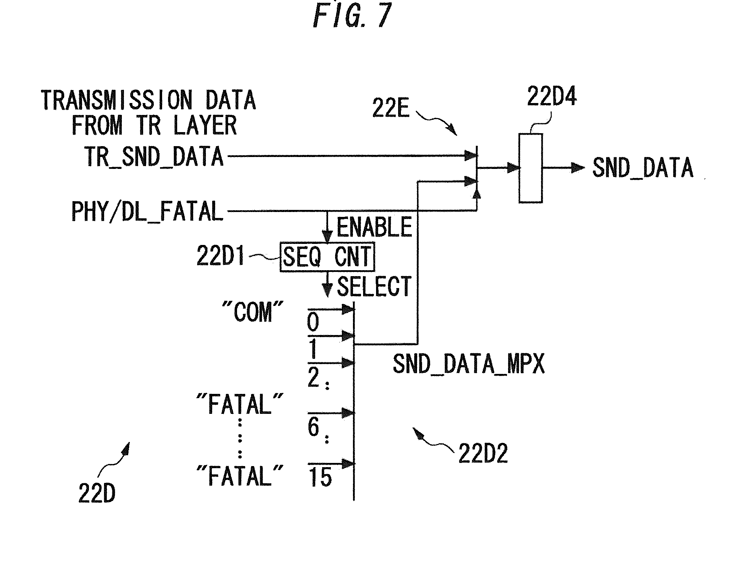

The 8b/10b encoder 22B encodes the 8-bits/byte data into the 10-bits data. The parallel/serial converting circuit 22A converts the 10-bits data into the serial data. The serial data is transmitted to the transmission link as exemplified by the link 2 in FIG. 3. The FATAL ordered set generating circuit 22D will be described in detail in FIG. 7. The FATAL ordered set generating circuit 22D is one example of a control information generating unit.

FIG. 3 illustrates a structure of a training sequence ordered set (TS1/TS2) used for link initialization on the transmission link by way of one example of the physical layer packet transmitted via the transmission link. The transmitting circuit 22 transmits the training sequence ordered set to the receiving circuit 21 of the information processing apparatus on the reception side via the transmission link. The training sequence ordered set is one example of first control information.

The receiving circuit 21 extracts the data for initializing the link from the training sequence ordered set transmitted from the transmitting circuit 22 of the information system 10 on the transmission side, and performs a variety of settings. In the example of FIG. 3, the training sequence ordered set contains an ordered set start character (COM), a link number (Link), a link width (Lane number "Lane"), a TS ID, etc. In the training sequence ordered sets TS1, TS2, characters indicating TS1, TS2 are set in the TS IDs. Note that in the ordered set as in FIG. 3, i.e., in the physical packet, the byte data given in each row is referred to as a character or a symbol.

FIG. 4 illustrates a structure of the FATAL ordered set introduced in the example 1. The FATAL ordered set is one example of the physical layer packet transmitted via the transmission link. The FATAL ordered set includes the ordered set start character (COM) and characters indicating a plurality of FATALs. In the example of FIG. 4, there are set the characters indicating FATALs consecutively from an m-th character to an n-th character. The transmitting circuit 22 on the transmission side with the unrecoverable error occurring transmits the FATAL ordered set illustrated in FIG. 4 as the physical layer packet to the receiving circuit 21 on the reception side. The information system 10 including the receiving circuit 21 on the reception side and the circuits on the high-order layer recognizes that the unrecoverable error occurs on the transmission side by detecting the FATAL ordered set. Then, the information system 10 controls the information system 10 itself so as to restrain the occurrence of a further secondary error.

FIG. 5 illustrates a configuration of the FATAL ordered set detection circuit 21D. In the example of FIG. 5, the FATAL ordered set detection circuit 21D includes a shift register 21D1 and AND gates 21D2 - 21D4. The shift register 21D1 includes 16-pieces of character buffers SFT15 - SFT0. The character buffers SFT15 - SFT0 are sequentially connected and shift the received characters from SFT15 to SFT0 corresponding to clocks.

The AND gate 21D2, when SFT = COM and when the SFT6 - SFT16 satisfy a FATAL condition, outputs "true" (e.g., a value "1") to a FATAL ordered set detection signal DETECT_FATAL_OS. In the example 1, if all the SFT6 - SFT16 are FATAL, it is determined that the FATAL ordered set is detected, however, it does not mean that the receiving circuit 21 is limited to the process such as this. For example, at least one of the SFT6 - SFT16 is FATAL, in which case the receiving circuit 21 deems it as the FATAL ordered set detection, and may output "true" to the FATAL ordered set detection signal DETECT_FATAL_OS. Note that the AND gates 21D23, 21D4 are circuits which respectively detect the training sequences TS1, TS2.

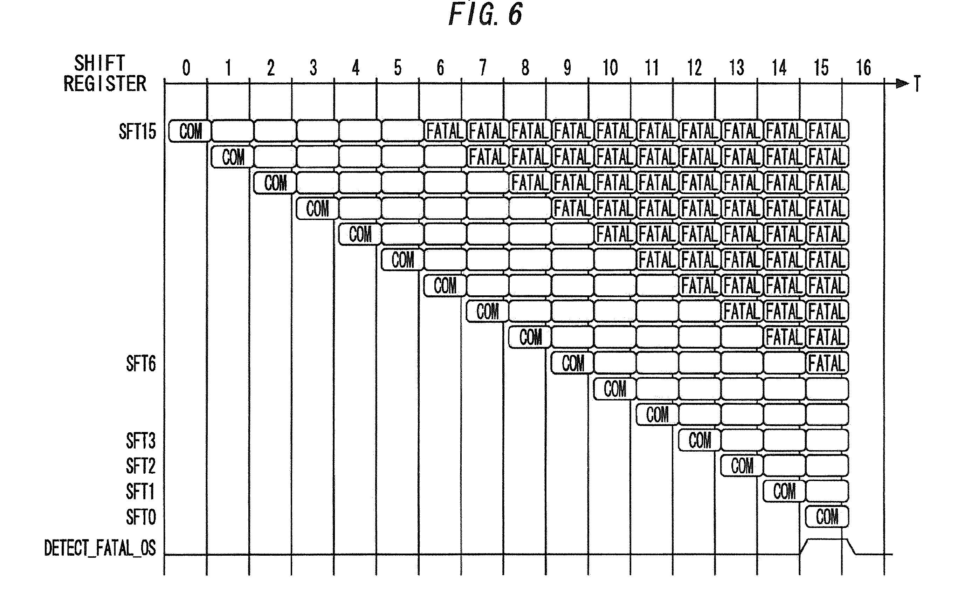

FIG. 6 depicts a timing chart when the FATAL ordered set detection circuit 21D detects the FATAL ordered set. In FIG. 6, the axis of abscissa represents the clock (timing T), while the axis of ordinate represents the shift register. In the example of FIG. 6, the COM is inputted to the SFT15 at a clock 0. The COMs are sequentially shifted from a clock 1 to a clock 5. Then, the FATALs are inputted from a clock 6 to a clock 15 and sequentially shifted in a direction from the SFT14 to the SFT0. Subsequently, e.g., at the clock 15, the FATAL ordered set detection circuit 21D in FIG. 5 comes to a status of outputting "true" to the FATAL ordered set detection signal DETECT_FATAL_OS.

FIG. 7 illustrates a configuration of the FATAL ordered set generating circuit 22D. In the example of FIG. 7, the FATAL ordered set generating circuit 22D includes a counter (SEQ_CNT) 22D1, selectors 22D2, 22E and a buffer 22D4. The counter 22D1 is enabled when a FATAL_OS transmission instructing signal PHY/DL_FATAL is asserted and starts counting. The counter 22D1 counts values of 0 - 15 cyclically. An output of the counter 22D1 is inputted as a selection signal of the selector 22D2. When the value of the counter 22D1 is 0, the selector 22D2 selects and outputs the character "COM". Furthermore, when the value of the counter 22D1 is 6-15, the selector 22D2 selects and outputs the character "FATAL".

The output of the selector 22D2 is inputted further to the selector 22E. The selector 22E selects and outputs transmission data TR_SND_DATA given from the TR (transport) layer and the output of the selector 22D2. The FATAL_OS transmission instructing signal PHY/DL_FATAL given from the error processing circuit 11 (see FIG. 9) is inputted as the selection signal to the selector 22E. Namely, when the FATAL_OS transmission instructing signal PHY/DL_FATAL is asserted, the selector 22E selects the output of the selector 22D2.

Whereas in a status of not asserting the FATAL_OS transmission instructing signal PHY/DL_FATAL, the selector 22E selects and outputs the transmission data TR_SND_DATA given from the TR layer. The output of the selector 22E is retained in the buffer 22D4 and handed over to the 8b/10b encoder 22B in FIG. 2.

As will be described in FIG. 9, the FATAL_OS transmission instructing signal PHY/DL_FATAL is asserted when detecting the error on the physical layer or the DL layer of the communication circuit 2. Further, the FATAL_OS transmission instructing signal PHY/DL_FATAL may be asserted also when not initializing the DL layer of the communication circuit 2.

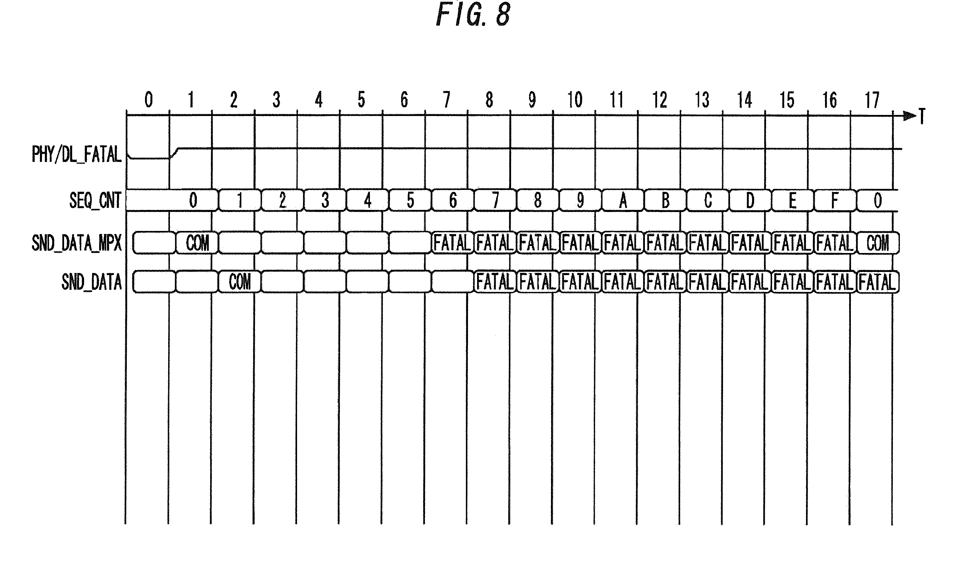

FIG. 8 illustrates a timing chart when the FATAL ordered set generating circuit 22D generates the FATAL ordered set. As in FIG. 8, when the FATAL_OS transmission instructing signal PHY/DL_FATAL is asserted, the counter (SEQ_CNT) 22D1 starts counting and outputs a count value in a range of 0 - 15. Then, when SEQ_CNT = 0, the character "COM" is output to an output SND_DATA_MPX of the selector 22D2. Further, when SEQ_CNT = any one of 6 through 15, the character "FATAL" is output to the output SND_DATA_MPX of the selector 22D2. The output SND_DATA_MPX of the selector 22D2 is set with a 1-clock delay in the buffer 22D4 and becomes a signal of the output SND_DATA.

FIG. 9 depicts the error processing circuit 11 provided corresponding to the CPU 1. FIG. 9 illustrates a processing circuit 110, an error checker 111 and a selector 123 as components of the error processing circuit 11. In the example 1, the error processing circuit 11 is provided on a one-by-one basis corresponding to each CPU1-1. Further, in the example 1, the error processing circuit 11 is provided on the one-by-one basis corresponding to the XB 4. The following description will discuss the case where the error processing circuit 11 in FIG. 9 is provided corresponding to the CPU 1, however, the configuration of the error processing circuit is the same also in the case of its being provided corresponding to the XB 4.

Note that as will be described in an example 2, as another configuration, in an architecture of segmenting the information system 10 into partitions, a component equivalent to the processing circuit 110 in the error processing circuit 11 is provided corresponding to each partition.

The processing circuit 110 includes an error retaining unit 112 which receives error notification from the error checker 111 that checks a variety of errors of the CPU 1 and the communication circuit 2 to which the CPU 1 is connected, a FATAL packet detection circuit 113 which detects a FATAL packet given from the DL layer, a FATAL packet generating circuit 114 for notifying the error to other units of the information system 10 via the DL layer, a FATAL mask retaining unit 115 and an active status retaining unit 116.

The error checker 111 notifies the processing circuit 110 of the variety of errors occurring in the CPU 1 etc. The variety errors contain the error on the physical layer (PHY layer) or the DL layer of the communication circuit 2 and the errors on the higher-order layers than the DL layer. The error notification given from the error checker 111 contains a region code indicating a unit where the error occurs. As the unit where the error occurs, it may be sufficient to distinguish between circuit units per CPU 1, e.g., per communication circuit 2. Further, as the unit where the error occurs, it may be sufficient to distinguish between the circuit units within, e.g., the XB 4.

The region code is stored in the error retaining unit 112. As illustrated in FIG. 9, the error retaining unit 112 includes a reset circuit 112A and a buffer 112B. When the error notification containing the region code is inputted to the error retaining unit 112, the buffer 112B retains the error notification containing the region code till a reset signal is inputted to the reset circuit 112A. A region code reset signal RST_RC given from the system monitoring device 5 can be inputted to the reset circuit 112A. The variety of errors are transferred to the system monitoring device 5, and, after the system monitoring device 5 has executed an error recovery process, the region code reset signal RST_RC given from the system monitoring device 5 is inputted to the reset circuit 112A. When the region code reset signal RST_RC is inputted to the reset circuit 112A, the region code etc of the buffer 112B is reset.

In the region codes stored in the error retaining unit 112, the region code derived from the error on the physical layer or the DL layer is transmitted as the FATAL_OS transmission instructing signal PHY/DL_FATAL to the FATAL ordered set generating circuit 22D in FIGS. 2 and 7. When the FATAL_OS transmission instructing signal PHY/DL_FATAL is inputted, the FATAL ordered set generating circuit 22D generates the FATAL ordered set according to the configuration in FIG. 7. Then, the FATAL ordered set is selected by the selector 22E and transmitted from the transmission circuit in FIG. 2 to the communication circuit 2 to which the transmission link connected on the physical layer is connected.

Note that the error checker 111 may, in addition to the error notification in the case of the occurrence of the error, notify of the status if the DL layer is not initialized and is disabled from performing communications on the DL layer. In this case, the region code derived from the error on the physical layer or the DL layer may contain a code indicating that the initialization of the DL layer is not yet completed. This contrivance being thus done, the FATAL_OS transmission instructing signal PHY/DL_FATAL is transmitted also when the initialization of the DL layer is not yet completed.

Moreover, the communication circuit 2 of the information system 10 may have a DL layer not-yet-completed initialization flag. Then, the selector 22E of the FATAL ordered set generating circuit 22D in FIG. 7 may be notified of the region code given from the error checker 111 and the DL layer not-yet-completed initialization flag in the form of, e.g., a logical sum (OR) by way of the FATAL_OS transmission instructing signal PHY/DL_FATAL. In this instance, in addition to the case where the error occurs on the physical layer or the DL layer, if the DL layer is disabled from performing the communications, the FATAL ordered set is generated by the FATAL ordered set generating circuit 22D and selected by the selector 22E.

Whereas if the DL layer is enabled to perform the communications, the selector 22E selects the FATAL packet. The transmitting circuit 22 in FIG. 2 sends the FATAL ordered set or the FATAL packet in a way that corresponds to the selection by the selector 22E.

Examined herein is transmissibility of the FATAL ordered set if the error occurs on the physical layer. Even when the error occurs on the physical layer, if the whole transmitting circuit 22 does not operate or if a circuit getting involved in transmitting the signals in the transmitting circuit 22 does not operate, there could be a case in which the transmitting circuit 22 cannot transmit the FATAL ordered set. On the other hand, if the error occurs in a part of the circuits on the physical layer, there could be a case in which the transmitting circuit 22 can transmit the FATAL ordered set.

Such being the case, in the example 1, the FATAL ordered set generating circuit 22D is provided, as illustrated in FIG. 2, in a position with a less of interference from other circuits on the physical layer, e.g., provided in the way of being connected to a circuit unit of the parallel/serial converting circuit 22A and to a circuit unit of the 8b/10b encoder 22B, which get involved in the transmission as the transmitting unit of the transmitting circuit 22. Such a configuration being taken, for example, even when the error occurs in the circuits such as the scrambler 22C and the byte striping circuit 24, which are on the side closer to the high-order layer of the DL layer circuit 25 etc, the transmitting circuit 22 can transmit the FATAL ordered set. The parallel/serial converting circuit 22A and the circuit unit of the 8b/10b encoder 22B are one example of a transmission circuit.

The FATAL ordered set generating circuit 22D may, however, be connected to the side much closer to the transmission end than the configuration in FIG. 2, e.g., connected to the parallel/serial converting circuit 22A. In this case, the FATAL ordered set generating circuit 22D may simply generate the FATAL ordered set encoded by 10 bits.

Further, the region code stored in the error retaining unit 112 is inputted to the FATAL packet generating circuit 114 via an OR gate OG1. The FATAL packet generating circuit 114 generates the FATAL packet transmitted on the TR layer. The generated FATAL packet on the TR layer is sent to the transmission link via the DL layer circuit 25, the byte striping circuit 24 and the transmitting circuit 22 and is transmitted to the communication circuit 2 to which the transmission link is connected. Further, the FATAL packet generating circuit 114 generates the FATAL packet on the basis of a signal DETECT_FATAL_OS indicating that the FATAL ordered set is detected from the physical layer (PHY layer). The generated FATAL packet is transmitted to other units via the link 3 including a data link layer enabling the data communications to be performed. The processing of the FATAL packet is the same as the processing of the normal TR layer packet, and hence its description is omitted. The FATAL packet generating circuit 114 is one example of an error data generating unit.

The region code stored in the error retaining unit 112 is set in the FATAL mask retaining unit 115 via the OR gate OG1 and an OR gate OG2. The OR gate OG2, when receiving an input of any one of the output signal of the FATAL packet detection circuit 113 and the FATAL ordered set detection signal DETECT_FATAL_OS given form the physical layer, sets ON the FATAL mask retaining unit 115.

The output signal of the OR gate OG1 is a signal being switched ON when any one of the region codes is retained by the error retaining unit 112 as described above. Moreover, the FATAL packet detection circuit 113 is a circuit that determines whether the reception packet on the TR layer, which is handed over from the DL layer circuit 25 (see FIG. 2), is the FATAL packet or not. If the reception packet on the TR layer, which is handed over from the DL layer, is the FATAL packet, the FATAL packet detection circuit 113 outputs a FATAL packet detection signal FATAL_PKT_DETECT. Further, the FATAL ordered set detection signal DETECT_FATAL_OS is a signal transmitted when the FATAL ordered set detection circuit 21D in FIGS. 2 and 5 detects the FATAL ordered set.

The FATAL mask retaining unit 115 restrains the error reported once to the system monitoring device 5 from being reported a plural number of times repeatedly. Accordingly, the output of the FATAL mask retaining unit 115 is inputted to an AND gate AG1 via an inverter. The output signal of the OR gate OG1 is inputted to the other input of the AND gate AG1. Therefore, when the FATAL mask retaining unit 115 is switched OFF, the output signal of the OR gate OG1 is output to the active status retaining unit 116. Namely, when the FATAL mask retaining unit 115 switched OFF, the active status retaining unit 116 acquires the output signal of the OR gate OG1, i.e., acquires the signal based on the region code in the error retaining unit 112.

The active status retaining unit 116 notifies the system monitoring device 5 of an error interrupt signal. The system monitoring device 5, upon completing the process derived from the error interrupt signal, resets the active status retaining unit 116 by use of an active status reset signal RST_AS for the active status retaining unit 116.

Whereas when the FATAL mask retaining unit 115 is switched ON, the output signal of the OR gate OG1 is cut off by the AND gate AG1 but is not output to the active status retaining unit 116. As described above, the FATAL mask retaining unit 115 is set by the output of the OR gate OG2. Moreover, the OR gate OG2 receives an input of (1) the output signal of the OR gate OG1, i.e., the OR signal based on the region code of the error retaining unit 112, an input of (2) the output signal of the FATAL packet detection circuit 113 and an input of (3) the FATAL ordered set detection signal given from the physical layer.

Among these signals, the output signal of the OR gate OG1 is derived from the error reported from the error checker 111. It therefore follows that the system monitoring device 5 is notified only once of the error reported from the error checker 111.

Moreover, the output signal of the FATAL packet detection circuit 113 indicates that the error is detected in another unit of the information system 10. If the error is detected in another unit of the information system 10, this unit (e.g. , the CPU 1) had better not further notify the system monitoring device 5 of the error. This being the case, the output signal of the FATAL packet detection circuit 113 is inputted to the FATAL mask retaining unit 115 via the OR gate OG2.

Still further, the FATAL ordered set detection signal given from the physical layer notifies that the unrecoverable error on the layer equal to or lower than the DL layer occurs in the connecting destination of the transmission link. Moreover, the FATAL ordered set detection signal given from the physical layer indicates that the system monitoring device 5 has already been notified of the error in the connecting destination of the transmission link. If the error is detected in the connecting destination of the transmission link, this unit (the connecting destination) had better not further notify the system monitoring device 5 of the error. This being the case, the FATAL ordered set detection signal given from the physical layer is inputted to the FATAL mask retaining unit 115 via the OR gate OG2.

The system monitoring device 5, upon completing the process derived from the error interrupt, resets the FATAL mask retaining unit 115 by the active status reset signal RST_AS. Thereafter, if the error newly occurs, the setting to the active status retaining unit 116 can be done.

The system monitoring device 5, when receiving the error interrupt signal from the active status retaining unit 116, acquires the error factor of the unit emitting the error interrupt signal and an interrupt unit indicating signal through the selector 123 on the basis of the interrupt signal. The system monitoring device 5 may, however, acquire the error factor and the interrupt unit indicating signal from an unillustrated register that retains the output of the selector 123.

Accordingly, the system monitoring device 5 recognizes the interrupt factor (region code) and the interrupt unit (the unit undergoing the interrupt) from the error interrupt signal. Thereat, the system monitoring device 5 executes the recovery process corresponding to the interrupt factor and the interrupt unit. Then, after completing the recovery process, the system monitoring device 5 emits a region code reset signal RST_RC and the active status reset signal RST_AS.

As described above, according to the information system 10 in the example 1, when the error occurs on the layer equal to or lower than the DL layer, the FATAL ordered set generating circuit 22D generates the control signal transmitted and received on the physical layer, and gives notification of the control signal to the communication circuit 2 of the communication partner device connected by the transmission link such as the link 3. Accordingly, even when the error occurs on the DL layer of the transmission link, any one of the units within the information system 10 can be notified of this error, e.g., the error occurring in any one of the units can be notified to another unit in the information system 10. Furthermore, even in a status before initializing the transmission link and in a status of disabling the transmission of the packet on the layer equal to or higher than the DL layer, another unit can be notified of the error that occurs in any one of the units within the information system 10. It is therefore feasible to restrain such a situation that the secondary error further occurs due to the error occurring on the layer equal to or lower than the DL layer within the information system 10. Note that the description made above has discussed the case where the error occurs in the CPU 1, however, the same is applied to a case where the error occurs in another unit, e.g., the XB 4.

On the other hand, the communication circuit 2 of each unit includes the FATAL ordered set detection circuit 21D, and hence the FATAL ordered set generated in another unit of the information system 10 can be detected. Accordingly, even when error occurs on the physical layer of the communication circuit 2 or on the data link layer in another unit, the CPU 1 and the XB 4 can detect the error. Moreover, the same is applied to a case of not initializing the data link layer of the communication circuit 2.

For example, the same configuration and the same process as those described above can be applied to also a case where the error on the layer equal to or lower than the DL layer occurs in the communication circuit of the XB 4. To be specific, the XB 4 includes the FATAL ordered set generating circuit 22D depicted in FIG. 7. The FATAL ordered set generating circuit 22D of the XB 4 generates the FATAL ordered set by receiving the FATAL_OS transmission instructing signal PHY/DL_FATAL sent from the same error processing circuit as the circuit in FIG. 9. With this configuration, the communication circuit of the XB 4 can notify the connecting destination of the communication circuit of the XB 4, e.g., notify the CPU 1 of the information system 10 of the error of the communication circuit of the XB 4 by use of the FATAL ordered set.

Furthermore, e.g. , the XB 4 includes the FATAL ordered set detection circuit 21D illustrated in FIG. 5. The FATAL ordered set detection circuit 21D of the XB 4 detects the FATAL ordered set from the physical layer packet and notifies the same error processing circuit of the detection result as the circuit in FIG. 9. The configuration such as this enables the respective units (each pair of the CPU 1 and the communication circuit 2) of the information system 10 to notify the XB 4 of the error.

Moreover, in the example 1, the error processing circuit 11 can give the selective instruction (e.g., the FATAL_OS transmitting instruction in FIG. 2) so that the selector 22E in FIGS. 2 and 7 selects any one of the FATAL packet and the FATAL ordered set. Accordingly, the each of the units of the information system 10 can send the proper error notification signal in the situation of the communication circuit 2.

Moreover, in the example 1, the communication circuit 2 is provided with the FATAL ordered set detection circuit 21D, and the detection signal DETECT_FATAL_OS of the FATAL ordered set detection circuit 21D is inputted to the FATAL packet generating circuit 114. Therefore, the communication circuit 2 in the example 1 can notify the another device of the error occurring in the communication partner device via the transmission link with no occurrence of the error by generating the FATAL packet on the basis of the FATAL ordered set given from the communication circuit 2 of the communication partner device.

Moreover, as illustrated in FIG. 2, the FATAL ordered set generating circuit 22D is connected to the transmission end, to the transmission link, of the transmitting circuit 22, to be specific, connected to the 8b/10b encoder 22B. Further, the FATAL ordered set detection circuit 21D is connected to the reception end, from the transmission link, of the receiving circuit 21, specifically, connected to the 10b/8b decoder 21B. Accordingly, even when the error occurs in a part of the physical layer of the transmission link, such a possibility can be enhanced that the communication circuit 2 in the example 1 transmits the FATAL ordered set to the communication circuit 2 of the communication partner device on the transmission link and, reversely, receives the FATAL ordered set from the communication circuit 2 of the communication partner device.

### Example 2

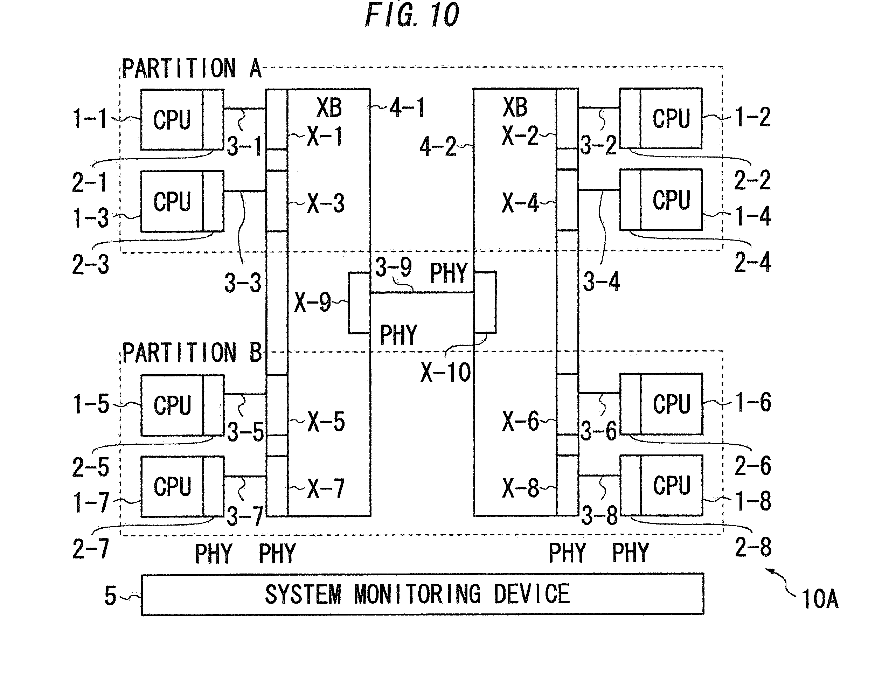

An information system 10A according to an example 2 will hereinafter be described with reference to FIG. 10. The example 1 has discussed the error notification when the error occurs on the physical layer or the DL layer of each of the communication circuits 2-1 through 2-4 in the information system 10 in which to establish the connections between the CPUs 1-1 through 1-4, the communication circuits 2-1 through 2-4 and the XB 4. Namely, to be more specific, the information system 10 notifies the units of the error other than the unit with the occurrence of the error in the information system 10 by use of the FATAL ordered set transferred and received on the physical layer of each of the communication circuits 2-1 through 2-4.

In the example 2, the information system 10A is segmented into the plurality of partitions and includes units characteristic of the respective partitions and units shared with the plurality of partitions. Then, the information system 10A, similarly to the information system 10 in the example 1, notifies the units of the error other than the unit with the occurrence of the error in the information system 10A by use of the FATAL ordered set. Other than the point of segmenting the information system 10A into the partitions, however, the configuration of the information system 10A is the same as that of the information system 10. Such being the case, the same components as those in the example 1 are marked with the same numerals and symbols as those in the example 1, and their descriptions are omitted.

FIG. 10 illustrates the information system 10A according to the example 2. The information system 10A includes the CPUs 1-1 through 1-8, the communication circuits 2-1 through 2-8 connected respectively to the CPUs 1-1 through 1-8, XBs 4-1 and 4-2 and the system monitoring device 5. Further, the communication circuits 2-1 through 2-4 are connected to the XB 4-1 via the links 3-1 through 3-4. Similarly, the communication circuits 2-5 through 2-8 are connected to the XB 4-2 via the links 3-5 through 3-8. Note that communication circuits X-1 through X-4 connected to the communication circuits 2-1 through 2-4 are provided also on the side of the XB 4-1 to the links 3-1 through 3-4. Moreover, communication circuits X-5 through X-8 connected to the communication circuits 2-5 through 2-8 are provided also on the side of the XB 4-2 to the links 3-5 through 3-8. Still further, communication circuits X-9 and X-10 for establishing a connection between the XB 4-1 and XB 4-2 are provided. Links 3-9 are provided between the communication circuit X-9 and the communication circuit X-10.

Similarly to the example 1, the CPUs 1-1 through 1-8, the communication circuits 2-1 through 2-8, the communication circuits X-1 through X-8 and the links 3-1 through 3-8 will, in the case of their being generically termed, hereinafter be referred to simply as the CPU 1, the communication circuit 2, the communication circuit X and the link 3, respectively. Moreover, the XBs 4-land 4-2 will, in the case of their being generically termed, hereinafter be referred to simply as the XB 4.

Moreover, in the example 2, a section including the CPUs 1-1 through 1-4, the communication circuits 2-1 through 2-4 and the communication circuits X-1 through X-4 of the XBs 4-1 and 4-2, is called a partition A. Further, a section including the CPUs 1-5 through 1-8, the communication circuits 2-5 through 2-8 and the communication circuits X-5 through X-8 of the XBs 4-1 and 4-2, is called a partition B. The partitions A and B are capable of executing the processes independently of each other. Still further, the communication circuits X-9, X-10 of the XBs 4-land 4-2 and the links 3-9 are not included in the partitions A, B but become elements shared with the partitions A, B. The link 3-9 will hereinafter be referred to also as a shared link.

For example, the CPUs 1-1 through 1-4 within the partition A perform the communications with each other via the communication circuits 2-1 through 2-4, X-1 through X-4, X-9 and X-10 and the shared link 3-9. Similarly, the CPUs 1-5 through 1-8 within the partition B perform the communications with each other via the communication circuits 2-5 through 2-8, X-5 through X-8, X-9 and X-10 and the shared link 3-9.

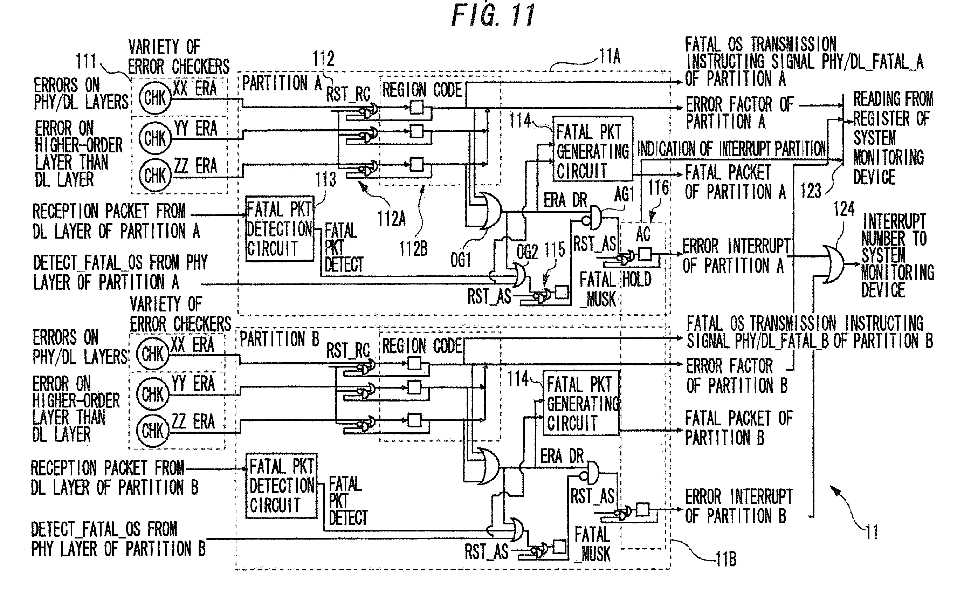

FIG. 11 illustrates the error processing circuit 11 according to example 2. In FIG. 11, the error processing circuit 11 is exemplified to include a partition A processing circuit 11A, a partition B processing circuit 11B, the error checker 111, the selector 123 and an OR gate 124. Note that the error processing circuit 11 includes processing circuits of other units, e.g., the processing circuit of the XB 4-1 and the processing circuit of the XB 4-2, of which illustrations are, however, omitted in FIG. 11. Moreover, the partition A processing circuit 11A and the partition B processing circuit 11B have the same configuration, and hence the description will hereinafter be focused on the partition A processing circuit 11A. The partition A processing circuit 11A will hereinafter be simply called the processing circuit 11A.

The processing circuit 11A includes the error retaining unit 112 which receives the error notification from the error checker 111 that checks a variety of errors of the partition A, the FATAL packet detection circuit 113 which detects a FATAL packet given from the DL layer, a FATAL packet generating circuit 114 for notifying the error to another partition via the DL layer, the FATAL mask retaining unit 115 and the active status retaining unit 116.

The error checker 111 notifies the processing circuit 11A of the variety of errors occurring in the partition A. Note that the error checker 111 may be provided in each of the CPU 1 and the communication circuit 2 within the partition A. Moreover, the error retaining unit 112 may be provided corresponding to each of the CPU 1 and the communication circuit 2 within the partition A. Furthermore, in the XB 4-1 and XB 4-2, the error checkers 111 may be provided corresponding to the respective communication circuits 2 in the XB 4-1 and XB 4-2. Still further, the error retaining units 112 may be provided corresponding to the respective communication circuits 2 in the XB 4-1 and XB 4-2.

As described in the example 1, the error notification given from the error checker 111 contains the region code indicating the unit where the error occurs. In this case, it may be sufficient for the region code to contain information for identifying the partition, information for identifying the CPU 1 within the partition, pieces of information for identifying XB 4-1, XB 4-2, etc, information for identifying the communication circuit 2, and so on.

The active status retaining unit 116 notifies the system monitoring device 5 of an error interrupt signal of the partition A via the OR gate 124. The OR gate 124 generates a logical signal of the error interrupt signal given from each of the units such as each partition and XB 4-1, XB 4-2, etc of the information system 10A, and notifies the system monitoring device 5 of the logical signal.

The system monitoring device 5, upon completing the process derived from the error interrupt signal, resets the active status retaining unit 116 by use of an active status reset signal RST_AS for the active status retaining unit 116.

The system monitoring device 5, when receiving the error interrupt signal from the active status retaining unit 116, acquires an error factor of the partition emitting the error interrupt signal, an interrupt partition and a signal for indicating the error unit within the partition via the selector 123 on the basis of the interrupt signal. The system monitoring device 5 may, however, acquire the error factor and the interrupt partition indicating signal from an unillustrated register that retains the output of the selector 123.

Accordingly, the system monitoring device 5 recognizes, based on the error interrupt signal, the interrupt factor (region code), the interrupt partition and the error unit within the partition. Thereupon, the system monitoring device 5 executes the recovery process corresponding to the interrupt factor, the interrupt partition and the error unit. Then, after the recovery process, a region code reset signal RST_RC and an active status reset signal RST_AS are emitted.

In the information system 10A of the example 2, when a fault occurs in the units characteristic of the partition other than the shared link 3-9, only the corresponding partition is notified of the error by use of the FATAL packet, and the partition not affected by the fault is enabled to operate continuously. For example, when the errors occur on the physical layer and the data link layer of the communication circuit 2-1, the processing circuit 11A corresponding to the CPU 1-1 within, e.g., the partition A may notify the communication circuit X-1 of the error by the FATAL ordered set. Further, the error processing circuit 11 may transmit the FATAL packet with respect to the link 3 enabled to transmit the data on the DL layer. Then, the error processing circuit 11 may notify inside the partition A of the FATAL packet with respect to the errors of the units characteristic of the partition, e.g., the errors detected in the CPU 1-1 and the communication circuit 2-1. Accordingly, the notification of the FATAL packet is limited to the interior of the partition A. As a result, the partition B is not affected by the error in the partition A.

Whereas when the errors occurs on the physical layers and the data link layers of the communication circuits X-9, X-10 connected to the shared link 3-9, the fault is deemed to exist in the shared unit. In this case, for instance, the communication circuit X-9 (or X-10) notifies the communication circuit X-10 (or X-9) of the communication partner device of the error by use of the FATAL ordered set. Moreover, the error notification is given through the FATAL packet in the link 3 other than the shared link 3-9. The whole information system 10A is notified of the FATAL packet in the case of the fault being caused in the shared unit.

For example, the FATAL packet contains an operation code field indicating the FATAL error and a destination field. Information representing the partition to which the CPU 1 etc of the destination device notified of the FATAL packet belongs, may be set in the destination field. Moreover, the CPUs 1 etc of the destination device may be enumerated in the destination field. The CPUs may be grouped and enumerated on a group-by-group basis. Specifically, the destination fields are allocated to the respective CPUs 1 on a bit-by-bit basis, in which the bit of the destination field associated with the CPU 1 of the destination device may be set to "1", while the bit associated with the CPU 1 of a non-destination device may be set to "0". Then, the error processing circuit 11, if the errors occur in the units characteristic of the partitions such as the partitions A and B, may generate the FATAL packets addressed to the CPUs within the respective partitions. On the other hand, the error processing circuit 11, if the error occurs in the unit shared with the plurality of partitions such as the partitions A and B, may generate the FATAL packets addressed to all the CPUs belonging to the related partitions. The generated FATAL packets may be transferred to all the CPUs within the information system 10A. Thereupon, each CPU 1 may, when receiving the FATAL packet, determine whether the FATAL packet is received or not, depending on whether the bit allocated to the self-CPU is "1" or "0" in the destination field. When receiving the FATAL packet, however, each CPU 1 may also make the determination depending on whether or not the identifying information of the partition in the destination field is coincident with the identifying information of the partition that is allocated to the self-CPU. Further, the FATAL packet does not necessarily have to be transmitted to the destination with "0" being registered in the destination field and to the non-target partition.

Through the process such as this, also in the case of the occurrences of the error on the physical layer and the error on the DL layer in the communication circuits X connected to the shared link 3-9, one communication circuit X-9 connected to the shared link 3-9 can notify the other communication circuit X-10 of the FATAL ordered set. Moreover, the communication circuit X-10 connected to the shared link 3-9 may notify other communication circuits X by use of the FATAL packet via the XB 4-2. Still further, the communication circuit X may transfer the FATAL packet to the communication circuit 2 via the link 3. The same is applied to a case where the communication circuit X-10 notifies the communication circuit X-9 of the FATAL ordered set.

In the case of the occurrences of the error on the physical layer and the error on the DL layer in the communication circuit X and the communication circuit 2 connected to the link 3 other than the shared link 3-9, however, the communication circuit X and the communication circuit 2 may make the notification by use of the FATAL ordered set.

Through the process described above, if the errors are limited to the units characteristic of the partition, other partitions cannot be affected by the errors. On the other hand, if the error occurs in the unit shared with the plurality of partitions, all the CPUs of the plurality of related partitions are notified of the error, thereby enabling the further influence by the error to be restrained. With the process described above, resistance against the fault between the partitions can be improved.

### Example 3

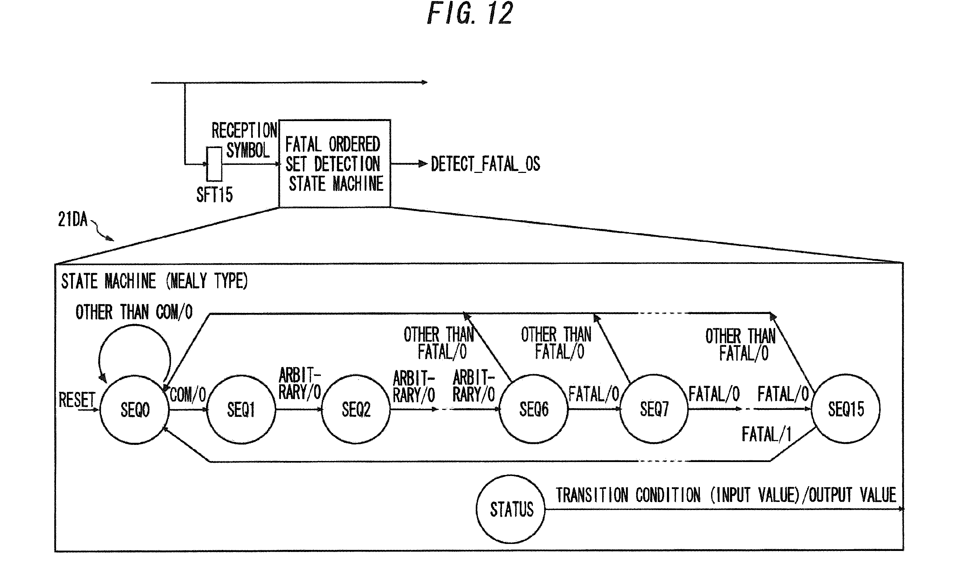

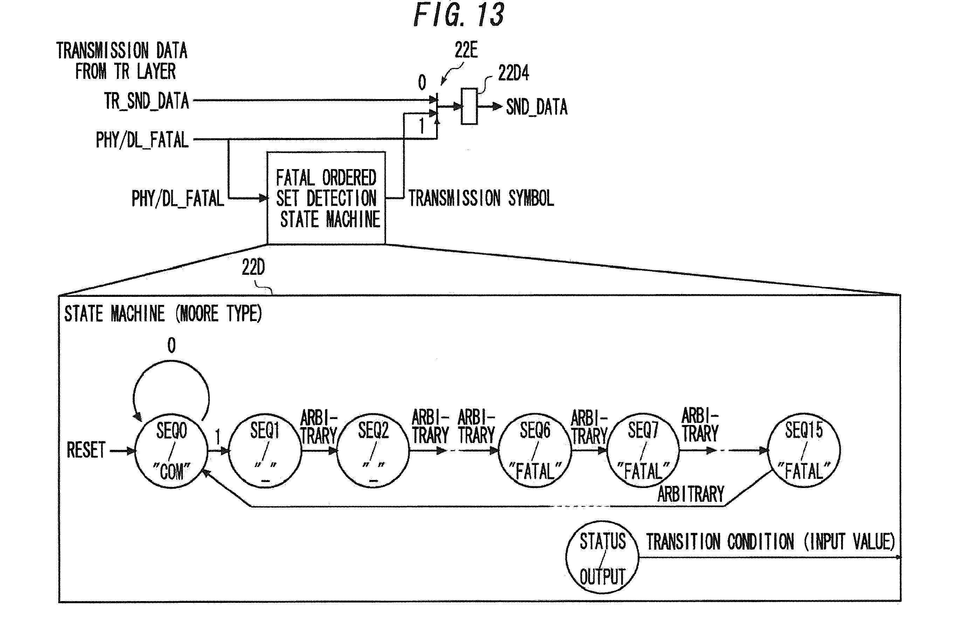

The FATAL ordered set detection circuit 21D and the FATAL ordered set generating circuit 22D according to an example 3 will hereinafter be described with reference to FIGS. 12 and 13. In the example 1, as in FIG. 5, the FATAL ordered set detection circuit 21D includes the shift register 21D1 and the AND gates 21D2 - 21D4. Further, as in FIG. 7, the FATAL ordered set generating circuit 22D includes the counter 22D1, the selectors 22D2, 22E and the buffer 22D4.

It does not, however, mean that the configurations of the FATAL ordered set detection circuit 21D and the FATAL ordered set generating circuit 22D are limited to those in the example 1. Such being the case, the example 3 will discuss modified examples of the FATAL ordered set detection circuit 21D and the FATAL ordered set generating circuit 22D. Note that the FATAL ordered set detection circuit 21D and the FATAL ordered set generating circuit 22D in the example 3, with the input/output signals being the same as those in the example 1, can be incorporated intact into the information system 10 of the example 1 and into the information system 10A of the example 2.

FIG. 12 illustrates the FATAL ordered set detection circuit 21D according to the example 3. The FATAL ordered set detection circuit 21D according to the example 3 is a state machine that inputs reception characters of the physical layer packet on a per character basis from a shift register SFT15 and, when detecting the FATAL ordered set, outputs a detection signal DETECT_FATAL_OS (value "1"). In the example 3 also, the character of the physical layer packet is referred to also as the symbol. The FATAL ordered set detection circuit 21D in FIG. 12 is a logical circuit of which an internal status transitions corresponding to the input character. The logical circuit such as this can be realized as, e.g., a gate array. The FATAL ordered set detection circuit 21D will hereinafter be simply termed the detection circuit 21D.

The detection circuit 21D transitions to SEQ0 when "reset" is inputted. In SEQ0, when a character other than the character COM is inputted, the detection circuit 21D keeps the status SEQ0. At this time, the output is "0". Furthermore, in the status SEQ0, when the character COM is inputted, the detection circuit 21D transitions to a status SEQ1. At this time, the output is "0".

When coming to the status SEQ1, the detection circuit 21D transitions to SEQ6 from a status SEQ2 with respect to the input of an arbitrary character. The input of the arbitrary character connotes being irrespective of a type of the character to be inputted. In the transition from SEQ1 to SEQ6, the output is "0" in either case.

In the status SEQ6, when the character other than FATAL is inputted, the detection circuit 21D returns to the status SEQ0. At this time, the output is "0". Further, in the status SEQ6, when FATAL is inputted, the detection circuit 21D advances to a status SEQ7. At this time, the output is "0". With respect to statuses SEQ7 to SEQ14 also, the operation of the detection circuit 21D is the same as the operation in the status SEQ6. Then, in the status SEQ15, when the character other than FATAL is inputted, the detection circuit 21D returns to the status SEQ0. At this time, the output is "0". Moreover, in the status SEQ15, when FATAL is inputted, the detection circuit 21D returns to the status SEQ0. AT this time, however, the detection circuit 21D outputs the value "1", i.e., outputs the detection signal DETECT_FATAL_OS.

The FATAL ordered set detection circuit 21D according to the example 3 is realized by the logical circuit conducting the operation described above, e.g., the gate array.

FIG. 13 illustrates the FATAL ordered set generating circuit 22D according to the example 3. The FATAL ordered set generating circuit 22D will hereinafter be simply referred to as the generating circuit 22D. In FIG. 13, the signal PHY/DL_FATAL representing that FATAL is detected on the physical layer or the DL layer is inputted to the generating circuit 22D.

Further, as in FIG. 13, the signal PHY/DL_FATAL is a signal for controlling the selection of the selector 22E. Namely, when the signal PHY/DL_FATAL is asserted, the selector 22E selects the FATAL ordered set given from the generating circuit 22D and outputs the FATAL ordered set to the buffer 22D4. The buffer 22D4 inputs the data to be retained as transmission data (SND_DATA) to the 8b/10b encoder 22B illustrated in FIG. 2. Whereas when the signal PHY/DL_FATAL is negated, the selector 22E selects the TR layer data and outputs the TR layer data as the transmission data (SND_DATA) to the buffer 22D4.

The generating circuit 22D in FIG. 13, to start with, transitions to the status SEQ0 due to an input of "reset". At this time, the generating circuit 22D outputs the character COM. In the status SEQ0, when the signal PHY/DL_FATAL is negated (the value "0" is inputted), the generating circuit 22D keeps the status SEQ0. While on the other hand, in the status SEQ0, when the signal PHY/DL_FATAL is asserted (the value "1" is inputted), the generating circuit 22D transitions to the status SEQ1 and outputs a null character. The null character may be notated by NULL.

Then, from the status SEQ0 to the status SEQ5, with respect to the input of the arbitrary value (0 or 1), the generating circuit 22D transitions sequentially to the status and outputs the null character in either case. Subsequently, from the status SEQ6 to the status SEQ15, with respect to the input of the arbitrary value (0 or 1), the generating circuit 22D transitions sequentially to the status and outputs FATAL in either case. Then, in the status SEQ15, when there is the input of the arbitrary value (0 or 1), the generating circuit 22D returns to the status SEQ0.

The logical circuit performing the operation described above, e.g., the gate array, realizes the FATAL ordered set generating circuit 22D according to the example 3.

According to the information processing apparatus, e.g., the pair of the CPU 1 and the communication circuit 2, the fault information can be transmitted via the network even if the data link layer capable of transferring data onto a physical layer of the network is not configured or if disabled from normally transmitting and receiving the data via the data link layer or if the fault exists in a part of the physical layer.

## Claims

1. An information processing apparatus comprising:
a control information generating unit configured to generate second control information transferred and received on a physical layer of a communication line on the basis of an error on the physical layer of the communication line or an error on a data link layer initialized by use of first control information of the physical layer; and
a transmitting unit configured to transmit the second control information generated by the control information generating unit via the physical layer of the communication line when a communication on the data link layer of the communication line is disabled.

2. The information processing apparatus according to claim 1, further comprising:
an error data generating unit configured to generate error data transferred and received on the data link layer when an error occurs within the information processing apparatus; and
a selecting unit configured to select the second control information when a communication on the data link layer of the communication line connected to a communication partner device is disabled, and select the error data when a communication on the data link layer is enabled,
wherein the transmitting unit transmits the second control information or the error data to the communication partner device connected via the communication line in accordance with the selection by the selecting unit.

3. The information processing apparatus according to claim 1 or 2, further comprising a detecting unit configured to detect the second control information transmitted from a communication partner device connected via the communication line.

4. The information processing apparatus according to claim 3, wherein the error data generating unit generates the error data on the basis of the detected second control information, and
the transmitting unit transmits the error data selected by the selecting unit via the data link layer to another communication partner device connected by a communication line other than the communication line via which the second control information has been detected.

5. The information processing apparatus according to any one of claims 1 to 4, wherein the control information generating unit is connected to a transmission circuit of the transmitting unit which transmits data to the physical layer of the communication line.

6. An information system comprising a plurality of information processing apparatuses connected via a communication line,
wherein each of the information processing apparatuses includes:
a control information generating unit configured to generate second control information transferred and received on a physical layer of the communication line on the basis of an error on the physical layer of the communication line or an error on a data link layer initialized by use of first control information of the physical layer;
an error data generating unit configured to generate error data transferred and received on the data link layer when an error occurs within the information processing apparatus;
a selecting unit configured to select the second control information when a communication on the data link layer of the communication line connected to a communication partner device is disabled, and select the error data when a communication on the data link layer is enabled; and
a transmitting unit configured to transmit either the second control information or the error data to the communication partner device via the communication line in accordance with the selection by the selecting unit.

7. A data transfer method causing a data transfer device to execute a process, the process comprising:
generating second control information transferred and received on a physical layer of a communication line on the basis of an error on the physical layer of the communication line connected to a communication partner device or an error on a data link layer initialized by use of first control information of the physical layer; and
transmitting the second control information generated in the generating via the physical layer of the communication line when a communication on the data link layer of the communication line is disabled.

8. The data transfer method according to claim 7, the process further comprising selecting the second control information or error data transferred and received via the data link layer, in the selection, the second control information being selected when a communication on the data link layer of the communication line connected to a communication partner device is disabled, and the error data being selected when a communication on the data link layer is enabled,
wherein the transmitting includes transmitting the second control information or the error data to the communication partner device connected via the communication line in accordance with the selection made in the selecting.

9. The data transfer method according to claim 7 or 8, the process further comprising detecting the second control information transmitted from the communication partner device via the communication line.

10. The data transfer method according to claim 9, wherein the transmitting includes transmitting the error data generated based on the detected second control information and selected in the selecting via the data link layer to another communication partner device connected by a communication line other than the communication line via which the second control information has been detected.

11. An information processing method executed by an information system in which a plurality of information processing apparatuses are connected via a communication line, each of the information processing apparatuses executing a process, the process comprising:
generating second control information transferred and received on a physical layer of the communication line on the basis of an error on the physical layer of the communication line or an error on a data link layer initialized by use of first control information of the physical layer;
generating error data transferred and received on the data link layer when an error occurs within the information processing apparatus;
selecting the second control information or the error data, in the selection, the second control information being selected when a communication on the data link layer of the communication line connected to a communication partner device is disabled, and the error data being selected when a communication on the data link layer is enabled; and
transmitting either the second control information or the error data to the communication partner device via the communication line in accordance with the selection made in the selecting.
